Europäisches Patentamt

European Patent Office

Office européen des brevets

(19)

(11) Publication number: **0 097 988**

**A1**

(12)

# EUROPEAN PATENT APPLICATION

(21) Application number: **83200845.2**

(22) Date of filing: **09.06.83**

(51) Int. Cl.³: **A 01 F 12/20**

(30) Priority: **24.06.82 US 391774**

(43) Date of publication of application:
**11.01.84 Bulletin 84/2**

(84) Designated Contracting States:
**DE FR IT**

(71) Applicant: **SPERRY N.V.**
**3A Leon Claeysstraat**
**B-8210 Zedelgem(BE)**

(72) Inventor: **Carnewal, José A.C.L.**
**Molenstraat 18/1**
**B-9900 Eeklo(BE)**

(72) Inventor: **Dekeyzer, Marcel A.**
**Diksmuidse Heerweg 306**
**B-8200 Brugge 2(BE)**

(74) Representative: **Vandenbroucke, Alberic T.J. et al,**
**SPERRY NEW HOLLAND DIVISION OF SPERRY N.V.**
**Leon Claeysstraat, 3A**
**B-8210 Zedelgem(BE)**

(54) Universal threshing cylinder.

(57) A threshing cylinder (22) for a combine harvester is disclosed wherein the cylinder is formed by a number of generally circular disc members (34) having a plurality of recessed notches (36) along the circumference thereof. Each notch is defined by a bottom surface (37) and two opposing side surfaces (38,39) inclined toward each other and extending generally radially outwardly from the bottom surface (37). A crop harvesting member (40) having a base member (50) received within each recessed notch (36) projects radially outwardly from the disc members (34) for rotation along a common circumferential path (45). The crop harvesting members (40) are retained in place on each disc member (34) by a wedge-shaped block (62) radially positioned by a bolt (64) threaded into the disc member (34) so that the threshing cylinder (22) is quickly and easily converted between grain and rice harvesting modes by exchanging crop harvesting members (40) without completely removing the entire threshing cylinder (22) from the harvesting machine.

FIG.2

UNIVERSAL THRESHING CYLINDER

The present invention relates generally to combine harvesters and, more specifically, to an improved threshing cylinder that can be easily converted from a grain harvesting mode to a rice harvesting mode and vice-versa without removing the threshing cylinder from the combine harvester.

Combine harvesters of the type seen in U.S. Patent No. 3.105.496 utilize a threshing cylinder on which is mounted a number of rasp bars that are cooperable with an adjacently mounted concave to separate the grain from the trash material, such as chaff and straw, in the severed crop material being conveyed thereto. The harvesting of rice requires a more aggressive threshing action and generally a series of elongated spikes replaces the rasp bars to provide the more aggressive action. These spikes generally extend further away from the threshing cylinder than the rasp bars and cooperate with a concave provided with a series of stationary spikes to rub the rice crop material therebetween and, thereby, separate the rice crop from the trash material.
Other crops, such as edible beans, can also utilize a different harvesting action than provided by rasp bars, as can be seen in the aforementioned U.S. Patent No. 3.105.496.

To change from one threshing cylinder to another, e.g. to change from the use of rasp bars to the use of elongated spikes, it has been necessary to change the entire threshing cylinder due to the physical differences between rasp bars and elongated spikes. The complete changing of threshing cylinders often requires the removal of bearings, the disconnecting of drive components and the services of more than one person, as threshing cylinders are relatively heavy pieces of equipment.

- 2 -

Consequently, this procedure has been a time consuming and difficult task. U.S. Patent No. 3.105.496 recognizes these problems and has presented a solution that enables the threshing cylinder to be taken apart in halves without the removal of the shaft, drives and bearings. Nevertheless, substantially the entire threshing cylinder is still being removed and this task remains cumbersome.

It is the object of the present invention to provide a threshing cylinder for a combine harvester that can be quickly and easily converted from a grain harvester mode to a rice harvesting mode and vice-versa. It is further also the object of this invention to provide a method of converting a threshing cylinder from one harvesting mode to another crop harvesting mode utilizing different crop harvesting elements and that can be quickly and easily done without removing the entire threshing cylinder from the harvesting machine.

According to the invention, a combine harvester is provided having :

a rotatably mounted threshing cylinder comprising crop harvesting elements mounted on at least two co-axial and generally circular disc members;

a concave mounted adjacent said threshing cylinder generally circumferentially relative thereto; the crop harvesting elements being cooperable with the concave to separate grain crop from trash material during rotation thereof relative to the concave and the disc members each having at least two opposing recessed notches formed into the circumference thereof for releasably retaining therein crop harvesting members extending between the at least two disc members;

each crop harvesting member having at least one base member mounted within at least one corresponding recessed notch to support at least one threshing element extending generally radially outwardly from the base member to a predetermined distance spaced from the axis of rotation so as to be rotatable proximate to the concave;

and means for releasably affixing the base members to the disc members within the respective recessed notches such that each crop harvesting member is individually removable from the threshing cylinder.

According to another aspect of the invention a method is provided for converting a threshing cylinder in a combine harvester from a first harvesting mode in which first harvesting elements are cooperable with a concave to separate the grain crop from the trash material to a second harvesting mode in which second harvesting elements are cooperable with said concave to harvest crop material and comprising the steps of :

loosening positioning means retaining one of the first harvesting elements on each of a plurality of disc members forming the threshing cylinder;

removing said one of the first harvesting elements from the threshing cylinder;

replacing said one of the first harvesting elements with a second harvesting element detachably connectable to the threshing cylinder;

tightening the positioning means to retain the second harvesting element on the threshing cylinder so that the radially outermost tip of the second harvesting element is rotatable in substantially the same circumferential path as the tip of said one of the first harvesting elements;

repeating the loosening, removing, replacing and tightening steps until each of the first harvesting elements on the threshing cylinder has been replaced by a corresponding second harvesting element.

It is thus a feature of the present invention that a threshing cylinder for a combine harvester is provided in which the rasp bars can be individually replaced with other harvesting elements without having to remove the entire threshing cylinder from the harvesting machine.

Also the threshing cylinder can be converted from one mode to another without disconnecting and removing any drive components relating to the threshing cylinder.

The different harvesting members have harvesting elements of different heights. Preferably the base members of the different harvesting members equally are of different heights such that, when mounted to the threshing cylinder, the circumferential paths of the outermost tips of all harvesting members are spaced at substantially the same radial distance from the axis of rotation.

It is an advantage of this invention that the centrifugal forces generated by the rotation of the threshing cylinder will not loosen the mounting of the crop harvesting members to the threshing cylinder.

The universal threshing cylinder for a combine harvester provided by the present invention is durable in construction, inexpensive of manufacture, carefree of maintenance, facile in assemblage and simple and effective in use.

The advantages of this invention will become apparent upon consideration of the following detailed disclosure of the invention, especially when taken in conjunction with the accompanying drawings wherein :

Fig. 1 is a side elevational view of a combine harvester schematically showing the harvesting apparatus for separating the edible grain crop from the trash material during a harvesting operation;

Fig. 2 is a partial cross-sectional view of the threshing cylinder incorporating the principles of the instant invention, the threshing cylinder having rasp bars attached as the crop harvesting elements;

Fig. 3 is a partial cross-sectional view of a threshing cylinder similar to that seen in Fig.2, but having spike bars attached as crop harvesting elements;

Fig. 4 is a partial cross-sectional view of one of the disc members forming the threshing cylinder as taken along lines IV-IV in Fig; 2, the threshing cylinder being in the grain harvesting mode with rasp bars attached to the disc member; and

Fig. 5 is a partial cross-sectional view of a disc member similar to the view seen in Fig. 4 and taken along lines V-V in Fig. 3, the threshing cylinder being in the rice harvesting mode with spike bars attached thereto.

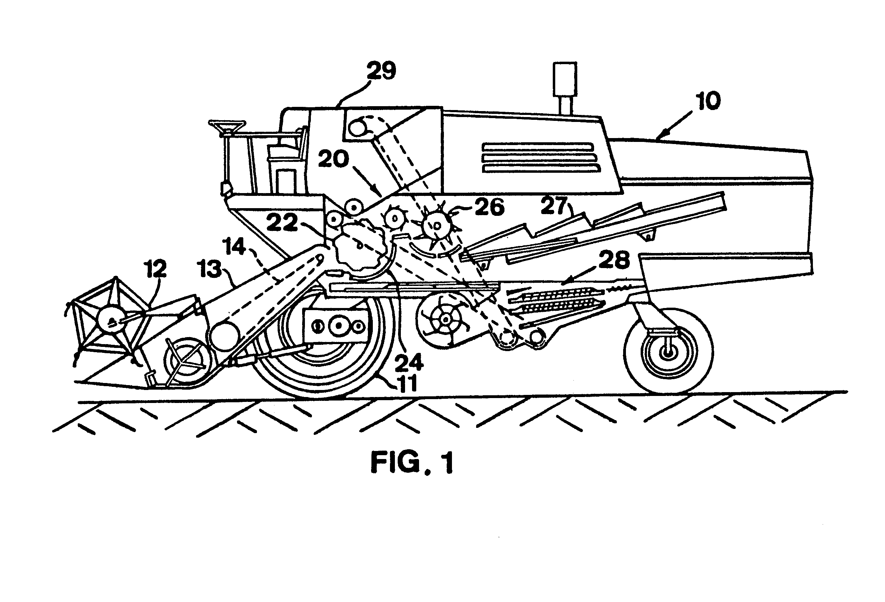

Referring now to the drawings and particularly to Fig. 1, a side elevational view of a combine harvester schematically showing the harvesting apparatus for separating the edible grain crop from the trash material during the harvesting operation can be seen. Any left and right references are used as a matter of convenience and are determined by standing at the rear of the machine facing the forward end, the direction of travel. The combine base unit 10 includes a wheeled frame 11 onto which is mounted a header apparatus 12, operable to sever standing crop material to initiate the crop harvesting process, and an infeed housing 13 interconnecting the header 12 and the base unit 10. The infeed housing 13 houses a conveyor 14 that is operable to convey severed crop material from the header 12 rearwardly to the base unit 10. The operation and construction of the aforementioned components are well known in the art and need not be further described.

The harvesting apparatus 20 is supported by the frame 11 within the base unit 10 adjacent the infeed housing 13 to receive severed crop material therefrom and provide further harvesting treatment. As is well known in the art, the harvesting apparatus 20 is operable to separate the grain crop from the trash material in the severed crop material being delivered thereto. Reference to the term grain crop includes the edible portion of the crop material being harvested, such as rice, grain, corn, beans, etc. The term trash material refers to any residue remaining after the grain crop has been separated therefrom, such as plant stalk material, straw, chaff, etc.

The harvesting apparatus 20 includes a threshing cylinder 22, the construction of which will be described in further detail below, that is cooperable with an adjacently mounted concave 24 to separate the grain crop from the trash material, as is also well know in the art. Additional mechanism, such as the separating rotor 26, straw walkers 27 and cleaning apparatus 28, serve to further separate grain crop from trash material, resulting in clean grain crop being temporarily stored in the graintank 29 and the trash material being discharged from the base unit 10.

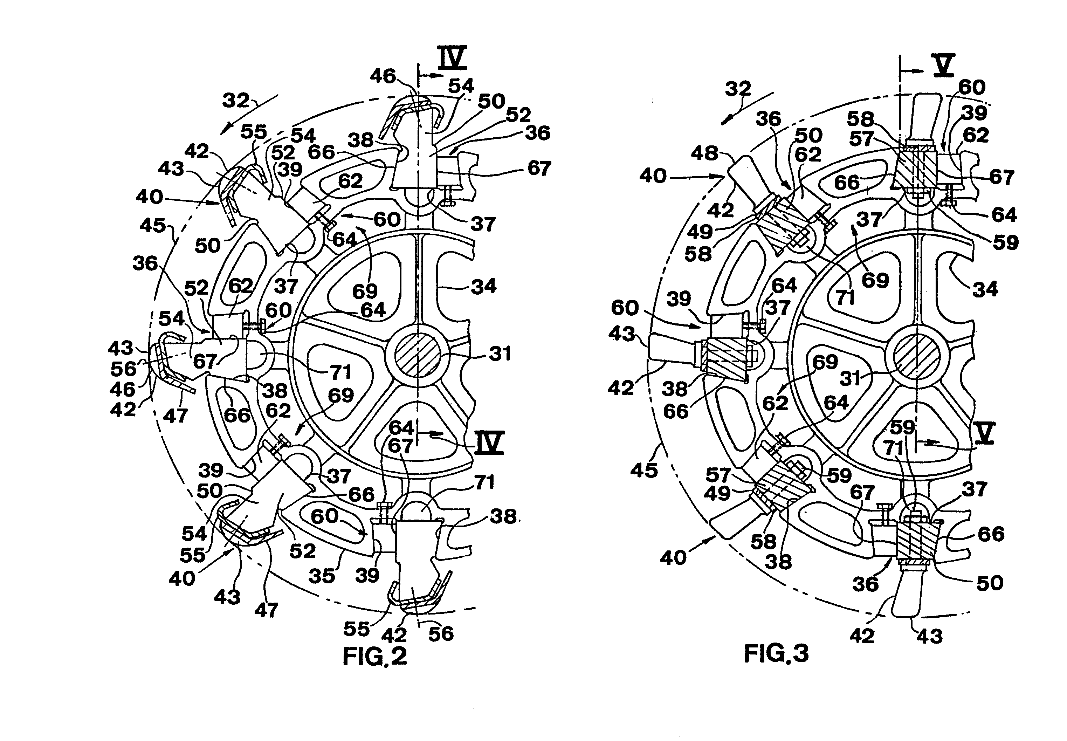

Referring now to Figs. 2 and 3, an improved threshing cylinder 22 can be seen. A shaft 31 is rotatably supported on the frame 11 by bearings suitably housed within the base unit 10 and defines the axis of rotation for the threshing cylincer 22 which is rotatable in the direction indicated by the arrow 32. A number of generally circular disc members 34 are affixed to the shaft 31 in a spaced apart relationship to be rotatable therewith and define the generally cylindrical shape of the threshing cylinder 22. Each disc member 34 is of a structural shape to be as lightweight as possible, yet provide sufficient strength to withstand the harvesting process.

Each disc member 34 is provided with a plurality of recessed notches 36 formed into the periphery thereof. The recessed notches 36 are typically even in number to facilitate the balancing of the disc member 34. Each recessed notch 36 includes a bottom surface 37 and first and second opposing side surfaces 38 and 39 extending generally radially outwardly from the bottom surface 37. The side surfaces 38,39 are inclined inwardly toward one another so as to define a recessed notch 36 that has a width along the bottom surface 37 that is greater than the width along the periphery 35 of the disc member 34.

A crop harvesting member 40 is mounted within each recessed notch 36. The corresponding recessed notches 36 on adjacent disc members 34 are aligned so that the crop harvesting member 40 interconnects each disc member 34 and is generally axially aligned. Each crop harvesting member 40 includes a harvesting or threshing element 42 that is positioned so that its outermost tip 43 travels within the circumferential path 45 for cooperation with the concave 24 to harvest the crop material as described above. In Fig. 2, the threshing cylinder 22 is in a grain harvesting mode with the harvesting element 42 comprising rasps 46 and, accordingly, the crop harvesting member 40 comprises a rasp bar 47. In the embodiment of Fig. 3, the threshing cylinder 22 is in a rice harvesting mode with the harvesting element 42 comprises a series of elongated spikes 48. Accordingly, the crop harvesting member 40 in Fig. 3 is a spike bar 49.

Each crop harvesting member 40 further includes a base member 50. In the embodiment seen in Fig. 2, the base member 50 includes a base portion 52 that is received within the recessed notch 36 and a support portion 54 integrally formed with the base portion 52 and projecting generally radially outwardly therefrom. In the embodiment seen in Fig. 2, there is one base member 50 corresponding to each recessed notch 36 in each disc member 34. A support bar 55 extends along the axial length of the rasp bar 47 and is affixed to the support portion 54 of each base member 50. The bar 47 is detachably affixed to the support bar 55 by a series of bolts diagrammatically indicated at 56.

In the embodiment seen in Fig. 3, the base member 50 comprises an elongated bar 57 received within the corresponding recessed notches 36 to interconnect each respective disc member 34. A slat 58 having a series of rectangular holes therethrough is connected to the bar 57 to maintain proper orientation of each respective spike 48 which is detachably connected through the slat 58 and the bar 57 by a bolt 59. Upon rotation of the threshing cylinder 22, the outermost tip 43 of the spikes 48 define the same circumferential path 45 as the rasp bar 47 even though the harvesting element 42 on the spike bar 49 is considerably radially longer than on the rasp bar 47.

Each crop harvesting member 40 is releasably retained within the respective recessed notch 36 by the retention mechanism 60. As can be seen in the cross-sectional views of Figs. 2-5, the retention mechanism 60 includes a wedge-shaped fixing block 62 positioned within each recessed notch 36 adjacent the respective base member 50. Each base member 50 has an inclined first engaging face 66 corresponding to and engageable with the first side surface 38 of each recessed notch 36 and a second engaging face 67 engageable with the respective wedge-shaped fixing block 62. Each fixing block 62 is engageable with both the second side surface 39 of the recessed notch 36 and the second engaging face 67 of the base member 50 to press the base member 50 against the first side surface 38 when the fixing block 62 is moved radially outwardly into engagement with the second side surface 39. By placing the crop harvesting member 40 against the bottom surface 37 of the recessed notch 36, the crop harvesting member 40 can be releasably affixed to the threshing cylinder 22 for rotation within the circumferential path 45 by the wedge-shaped fixing block 62 being moved into a radially outward position.

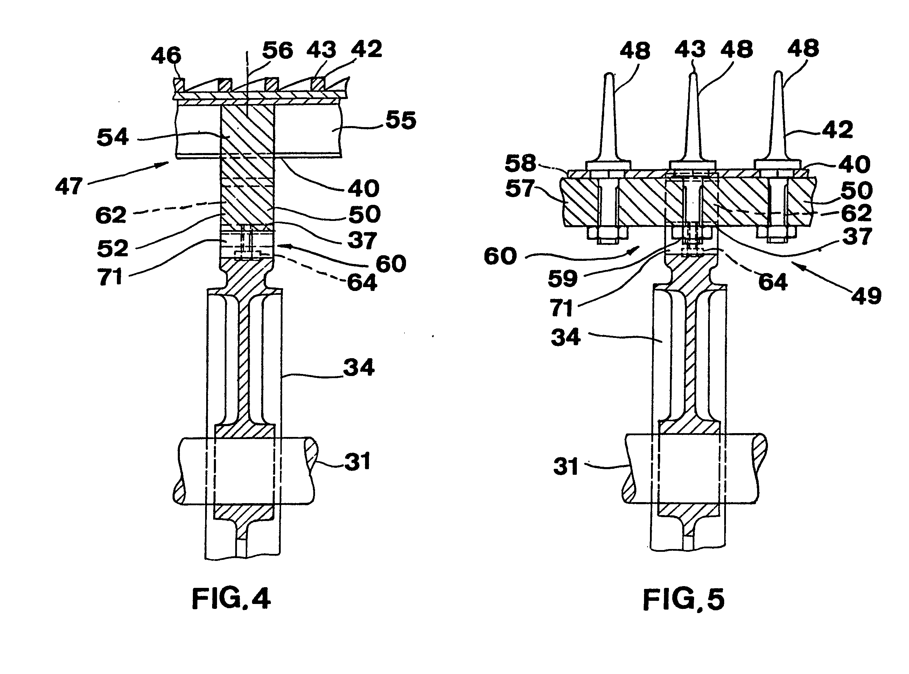

A positioning bolt 64 is threaded into the disc member 34 from the opening 69 formed in the disc member 34 radially inwardly of each recessed notch 36, and extends radially outwardly therefrom through the bottom surface 37 of the corresponding recessed notch 36 to be engageable with the respective fixing block 62. Manipulation of the positioning bolt 64 can move the fixing block 62 into its radially outward position to retain the crop harvesting member 40 within the recessed notch 36. The fixing block 62 may be moved radially inwardly to permit a release of the crop harvesting member 40 by withdrawing the positioning bolt 64 radially inwardly toward the opening 69,

- 10 -

thereby permitting the fixing block 62 to disengage the second side surface 39. As is best seen in Figs. 3 and 5, each recessed notch 36 includes a semicircular indentation 71 formed within the bottom surface 37 to accomodate the bolt 59 attaching each individual spike 48 to the support bar 57.

One skilled in the art will readily realize that the threshing cylinder 22 described above will permit a conversion between two or more harvesting modes utilizing different crop harvesting members 40 without removal of the entire threshing cylinder 22 from the base unit 10. A single person may convert the threshing cylinder 22 from the grain harvesting mode utilizing rasp bars 47 seen in Figs. 2 and 4 to the rice harvesting mode utilizing spike bars 49 seen in Figs. 3 and 5 by following the procedure outlined below.

The operator needs only work on one crop harvesting member 40 at a time. Starting with the grain harvesting mode, the operator must loosen each of the positioning bolts 64 retaining the crop harvesting member 40 within the recessed notches 36 by turning the bolt 64 radially inwardly. In the embodiment shown in Figs. 2-5, it has been found that approximately two revolutions for each bolt 64 is sufficient to enable the crop harvesting member 40 to be released. After the bolt 64 has been moved radially inwardly, the operator must move the fixing block 62 to a radially inward position, such as by tapping it with a hammer. Once each fixing block 62 has been moved radially inwardly, said fixing blocks 62 may be removed and the rasp bar 47 may be replaced by a spike bar 49.

The placement of the substitute crop harvesting member 40 is accomplished by positioning the base member 50 against the bottom surface 37, and preferably against the first side surface 38, of the corresponding recessed notches 36. After repositioning the fixing block 62 within the recessed notch 36, if it had been removed, a tightening of the positioning bolt 64 to move it radially outwardly causes the bolt 64 to engage the fixing block 62 and move it into its radially outward position. The engagement of the fixing block 62 with the second side surface 39 forces the base member 50 against the first side surface 38 and retains the crop harvesting member 40 within the recessed notch 36. By maintaining the base member 50 against the bottom surface 37, the outermost tip 43 of the harvesting element 42 will rotatably travel along the circumferential path 45.

The above procedure is repeated until each of the rasp bars 47 has been replaced by spike bars 49. If a corresponding change in the concave 24 is also necessary, the concave 24 may be replaced without cumbersome adjustments because the crop harvesting members 40 operate in the same circumferential path 45, irrespective of the type of crop harvesting member 40 being used. To convert the threshing cylinder 22 from the rice harvesting mode using spike bars 49 back to the grain harvesting mode, the same procedure outlined above is followed until each spike bar 49 is replaced by a rasp bar 47.

It will be understood that various changes in the details, materials, steps and arrangement of parts which have been described and illustrated in order to explain the nature of the invention, will occur to and may be made by those skilled in the art upon a reading of the disclosure within the principles and scope of the invention.

- 12 -

Claims

1.      A combine harvester having a rotatably mounted threshing cylinder (22) comprising crop harvesting elements (42) mounted on at least two co-axial and generally circular disc members (34), and a concave (24) mounted adjacent said threshing cylinder (22) generally circumferentially relative thereto; the crop harvesting elements (42) being cooperable with the concave (24) to separate grain crop from trash material during rotation thereof relative to the concave (24);

the combine harvester being characterized in that the disc members (34) each have at least two opposing recessed notches (36) formed into the circumference thereof for releasably retaining therein crop harvesting members (40) extending between the at least two disc members (34); each crop harvesting member (40) having at least one base member (50) mounted within at least one corresponding recessed notch (36) to support at least one threshing element (42) extending generally radially outwardly from the base member (50) to a predetermined distance spaced from the axis of rotation so as to be rotatable proximate to the concave (24) and in that means (60) are provided for releasably affixing the base member (50) to the disc members within the respective recessed notches (36) such that each crop harvesting member (40) is individually removable from the threshing cylinder (22).

2.      A combine harvester according to claim 1 characterized in that each threshing element (42) comprises a rasp bar (47) and in that each base member (50) includes a base portion (52) positioned within a corresponding recessed notch (36) and a support portion (54) extending generally radially outwardly from the base portion (52) for mounting the rasp bar (47) such that said rasp bar (47) is rotatable about the axis of rotation at the predetermined distance from said axis.

3.      A combine harvester according to claim 2 characterized in that the rasp bar (47) is detachably connected to a support bar (55) extending between the at least two disc members (34) and affixed to the support portions (54) of corresponding base members (50).

4.      A combine harvester according to claim 1, characterized in that each threshing element (42) comprises a plurality of elongated threshing spikes (48) mounted to a corresponding base member (50) and extending radially outwardly therefrom; said base member (50) being an elongated bar (57) extending between the at least two disc members (34) and the radially outermost tips (43) of the elongated spikes (48) defining a circumferential path (45) spaced the predetermined distance away from the axis of rotation when rotating.

5.      A combine harvester according to claim 4, characterized in that each threshing spike (48) is individually mounted on the corresponding elongated bar (57) so as to be individually removable from said base member (50).

6.      A combine harvester according to any of the preceding claims, characterized in that each recessed notch (36) has a bottom surface (37) and two opposing side surfaces (38,39) extending generally outwardly from the bottom surface (37)

- 14 -

away from the axis of rotation; one of the side surfaces (38) being inclined inwardly toward the other side surface (39) as the surfaces extend outwardly away from the axis of rotation, such that the recessed notch (36) is wider along the bottom surface (37) than along the circumferential edge of the corresponding disc member (34); the means (60) for detachably affixing a base member (50) including a wedge-shaped fixing block (62) which is cooperable with the inclined side surface (39) of the corresponding recessed notch (36) to force the base member (50) against the other side surface (38) thereof as the fixing block (62) is moved radially outwardly away from the axis of rotation for retaining the base member (50) within said recessed notch (36) in the respective disc member (34).

7.  A combine harvester according to claim 6 characterized in that the means (60) for detachably affixing the base member (50) further includes positioning means (64) for adjustably positioning the fixing block (62) within the recessed notch (36) along a generally radial path; the selective positioning of the fixing block (62) at a radially outward position retaining the base member (50) within the recessed notch (36) and the positioning of the fixing block (62) at a radially inward position permitting the base member (50) to be released from its position within the recessed notch (36).

8.  A combine harvester according to claim 7 characterized in that the positioning means (64) comprise a bolt adjustably threaded into each respective disc member (34) through the bottom surface (37) of each recessed notch (36) to project generally radially outwardly therefrom for engagement with the respective fixing block (62).

9. A combine harvester according to any of the claims 6 ot 8, characterized in that both side surfaces (38,39) of the recessed notch (36) are inclined relative to a radial line extending from the axis of rotation and such that the recessed notch (36) is wider along the bottom surface (37) than along the circumferential edge (35) of the respective disc member (34); each base member (50) having a first inclined engaging face (66) corresponding to one of the inclined side surfaces (38) and a generally radially extending engaging face (67) engageable with the fixing block (62).

10. A combine harvester according to any of the claims 6 to 9 characterized in that each base member (50) has a bottom face engageable with the bottom surface (37) of the respective recessed notch (36) for radially positioning the harvesting member (40) relative to the axis of rotation.

11. A combine harvester according to claim 10, when appended to claim 5, characterized in that the bottom surface (37) of each recessed notch (36) has an indentation (71) formed therein for receiving fixation means for mounting threshing spikes (48) on the elongated bar (57) of a corresponding base member (50), in case the harvesting members (40) mounted on the threshing cylinder (22) are of the threshing spike type.

0097988

- 16 -

12.　　　　A combine harvester according to claim 7 or 8, characterized in that the positioning means (64) comprise a bolt extending radially outwardly through the bottom surface (37) of the corresponding recessed notch (36) to be engageable with the corresponding fixing block (62); each bolt (64) being threaded into the respective disc member (34) so as to be adjustable for varying the radial position of the corresponding fixing block (62).

13.　　　　A method of converting a threshing cylinder (22) in a combine harvester from a first harvesting mode in which first harvesting elements (42) are cooperable with a concave (24) to separate the grain crop from the trash material to a second harvesting mode in which second harvesting elements (42) are cooperable with said concave (24) to harvest crop material, characterized in the steps of:

loosening positioning means (60) retaining one of the first harvesting elements (42) on each of a plurality of disc members (34) forming the threshing cylinder (22);

removing said one of the first harvesting elements (42) from the threshing cylinder (22);

replacing said one of the first harvesting elements (42) with a second harvesting element (42) detachably connectable to the threshing cylinder (22);

tightening the positioning means (60) to retain the second harvesting element (42) on the threshing cylinder (22) so that the radially outermost tip (43) of the second harvesting element (42) is rotatable in substantially the same circumferential path (45) as the tip (43) of said one of the first harvesting elements (42);

repeating the loosening, removing, replacing and tightening steps until each of the first harvesting elements (42) on the threshing cylinder (22) has been replaced by a corresponding second harvesting element (42).

14. A method according to claim 13 characterized in that the loosening step comprises the steps of :

turning a bolt (64) threaded into one of the disc members (34) to radially position a wedge.shaped fixing block (62) cooperable with an inclined side surface (39) of a recessed notch (36) formed in the disc member (34) to retain said one of the first harvesting elements (42) within the recessed notch (36) so that it is rotatable along said circumferential path (45); said turning of the bolt (64) permitting the fixing block (62) to move radially inwardly and enable the first harvesting element (42) to be removed from the disc member (34);

removing the fixing block (62) from the corresponding recessed notch (36) after the corresponding bolt (64) is turned to permit the fixing block (62) to move radially inwardly; and

repeating said turning and removing steps for each disc member (34) forming the threshing cylinder (22) until the first harvesting element (42) can be removed from the threshing cylinder (22).

15. A method according to claim 13 or 14 characterized in that the tightening step comprises the steps of :

replacing the fixing block (62) into the corresponding recessed notch (36) adjacent the second harvesting element (42) and the inclined side surface (39) and in engagement with the corresponding bolt (64); and

turning the bolt (64) to move the fixing block (62) radially outwardly to engage the inclined side surface (39) and retain the second harvesting element (42) within the recessed notch (36).

16.        A method according to any of the claims 13 to 15 characterized in that it further comprises the steps of :

positioning the second harvesting element (42) against the bottom surface (37) of the recessed notch (36); and

maintaining the second harvesting element (42) against the bottom surface (37) while tightening the positioning means (60) to position the radially outermost tip (43) of the second harvesting element (42) along the circumferential path (45).

**FIG. 1**

FIG.3

FIG.2

0097988

FIG.5

FIG.4

European Patent Office

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| Y,A | DE-C- 89 530 (L. PÖHLER) <br> * Whole document * | 1,6,13 | A 01 F 12/20 |
| D,Y <br> A | US-A-3 105 496 (W.D. WEBER) <br> * Column 2, line 5 - column 3, line 56; figures 1, 4, 6 * | 1,3,13 | |
| A | FR-A-1 017 168 (STE DE RECHERCHES ET D'EXPLOITATION D'INVENTIONS GUILLOTIN) * Page 1, left-hand column, line 20 - right-hand column, line 8; page 2, left-hand column, lines 12-38; figures 1, 2 * | 4,5 | |

TECHNICAL FIELDS SEARCHED (Int. Cl. 3)

A 01 F 12/00

The present search report has been drawn up for all claims

| Place of search | Date of completion of the search | Examiner |
|---|---|---|
| BERLIN | 26-08-1983 | BERGZOLL M C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82